# EUROPÄISCHE PATENTSCHRIFT

(11) **EP 3 206 507 B1**
(45) Veröffentlichungstag und Bekanntmachung des Hinweises auf die Patenterteilung: **29.05.2019**
(21) Anmeldenummer: 15793682.4
(22) Anmeldetag: 13.10.2015
(51) Int. Cl.: A23K 40/20, A23K 50/40, A23K 50/42, A23K 40/30, A23K 40/35, A23K 10/18, A23K 20/147, A23K 20/158, A23K 40/25, A23K 10/35

(54) **TIERNAHRUNGSMITTELZUSAMMENSETZUNG AUFWEISEND ZWEI KOMPONENTEN**
FEED PRESENTING TWO COMPONENTS
PRODUIT ALIMENTAIRE ANIMAL PRÉSENTANT DEUX COMPOSANTS

(30) Priorität: 14.10.2014 AT 5016114 U
(43) Veröffentlichungstag der Anmeldung: 23.08.2017
(73) Patentinhaber: Adolf Rupp Herrnmühle OG, 6912 Hörbranz (AT)
(72) Erfinder: RUPP, Christoph, 6912 Hörbranz (AT)
(74) Vertreter: Rupp, Christian
(86) Internationale Anmeldenummer: PCT/AT2015/050254
(87) Internationale Veröffentlichungsnummer: WO 2016/058017

(56) Entgegenhaltungen:
- EP-A1- 0 647 410
- EP-A1- 1 692 946
- EP-A1- 2 772 144
- WO-A1-2011/134494
- WO-A1-2012/052425
- US-A1- 2013 273 125
- US-A1- 2013 273 206
- US-A1- 2014 154 361

## Beschreibung

### Gebiet der Erfindung

Die vorliegende Erfindung bezieht sich auf Tiernahrungsmittelzusammensetzungen, insbesondere Mehrkomponenten-Tiernahrungsmittelzusammensetzungen, aufweisend eine äussere und eine innere Komponente, mit gesteigerter Verträglichkeit und verbesserter Schmackhaftigkeit.

Vorzugsweise ist die Tiernahrungsmittelzusammensetzung eine Katzennahrungsmittelzusammensetzung.

### Hintergrund der Erfindung

Halbfeuchte Tiernahrungsmittelerzeugnisse sind im Stand der Technik bekannt.

EP 2 772 144 A1 offenbart eine Methode zur Herstellung eines Zwei-Schichten Futter- oder Lebensmittels, welches eine äußere und eine innere Schicht aufweist.

US 2014/0154361 A1 beschreibt Teigtaschen-Nachbildungen, die als Futtermittel für Haustiere geeignet sind.

EP 1 692 946 A1 bezieht sich auf essbare, leicht verdauliche und langlebige Kaumittel für Haustiere.

US 2013/0273206 A1 bezieht sich auf Futtermittel und insbesondere auf Futtermittel mit weichen und harten Eigenschaften für Haustiere. Die Futtermittel sind zweifach strukturierte Futtermittel hoher Feuchte und verbesserter Schmackhaftigkeit.

WO 2008/144234 A1 offenbart ein extrudiertes Tierfuttermittelprodukt, welches sich aus verschiedenen extrudierten Bestandteilen zusammensetzt. Extrusion der einzelnen Komponenten ist erforderlich, wobei die einzelnen Zutaten verschiedene Portionen bilden.

EP 1 527 699 A1 beschreibt ein Heimtiernahrungsprodukt mit wenigstens zwei phasengetrennten Schichten, wobei eine untere Basisschicht aus einem festen Nahrungsmittel gebildet ist und eine obere Schicht aus einer Geleezubereitung besteht, in die feste, aus Fleischmasse rekonstruierte Fleischbrocken eingebettet sind. Es wird keine Tierfuttermittel-zusammensetzung bestehend aus einer äusseren Komponente, welche eine innere Komponente vollständig umschließt dargelegt.

US 4,795,655 bezieht sich auf ein zweiteiliges Haustierfuttermittel bestehend aus einem Basisteil und einer Füllung. Die Füllung weist 30 bis 40 Gew.-% Wasser auf. Keiner der beiden Bestandteile enthält Kartoffelmehl und ist frei von Getreide.

US 4,229,485 zeigt getrocknetes, getreidebasiertes Tierfutter aus mehl- und proteinhaltigem Material umhüllt von einem Überzug aus Leber und mehlhaltigem Material. Beide Bestandteile basieren auf Getreidemehl.

### Aufgabe der Erfindung

Von diesem Stand der Technik ausgehend, ist es Aufgabe der vorliegenden Erfindung, eine lagerstabile Tiernahrungsmittelzusammensetzung mit gesteigerter Verträglichkeit und verbesserter Schmackhaftigkeit bereitzustellen.

### Zusammenfassung der Erfindung

Diese Aufgabe wird durch die Merkmale des unabhängigen Anspruchs 1 gelöst.

Die abhängigen Ansprüche 2-14 bilden den Gedanken der Erfindung in vorteilhafter Weise weiter.

Eine Mehrkomponenten-Tiernahrungsmittelzusammensetzung gemäß der Erfindung weist zwei Komponenten auf, eine äussere Komponente, welche eine innere Komponente vollständig umschließt, wobei die äussere Komponente Kartoffelmehl und weiter wenigstens einen Inhaltsstoff ausgewählt aus einem Fett, einem Protein oder einer Kombination derselben enthält und härter ist als die innere Komponente, wobei:
- die innere Komponente Kartoffelmehl enthält,
- die äussere Komponente einen Kartoffelmehlanteil von mindestens 10 Gew.-% aufweist,
   und die äussere Komponente einen Gesamtfeuchtigkeitsgehalt von weniger als 8 Gew.-% aufweist,
- die äussere Komponente frei von Getreidebestandteilen ist,
- die innere Komponente frei von Getreidebestandteilen ist, und
- die Tiernahrungsmittelzusammensetzung durch Ko-Extrusion der inneren Komponente innerhalb der äusseren Komponente hergestellt ist.

Die Textur der erfindungsgemäßen Tiernahrungsmittelzusammensetzung kann unter anderem mittels "Kramer-Scherzelle" bestimmt werden. Die "Kramer-Scherzelle" ist eine für extrudierte Lebensmittel verwendete Textur-Messmethode, wobei ein Beißen bzw. Kauen mit mehreren Zähnen stimuliert wird. Dadurch gibt die "Kramer-Scherzelle" Auskunft über Bissverhalten, Knusprigkeit und Festigkeit der Zusammensetzung. Bei der Messung fahren 5 oder 10 Schneiden / Scherblätter mit konstanter Geschwindigkeit durch eine definierte Menge an Probenmaterial, wobei sie dieses komprimieren, scheren und extrudieren. Als Ergebnis wird eine Durchschnittskraft erhalten, die erforderlich ist, um das Probenmaterial zu durchdringen. Diese Kraft ist ein Indiz auf die Zartheit, Zähigkeit oder Festigkeit des untersuchten Probenmaterials.

In einer weiteren Ausführungsform weist die erfindungsgemäße Tiernahrungsmittelzusammensetzung zwei Komponenten, eine äussere Komponente, welche eine innere Komponente vollständig umschließt, wobei die äussere Komponente Pseudogetreide enthält und härter ist als die innere Komponente.

Pseudogetreide im Sinne der vorliegenden Erfindung sind Körnerfrüchte von Pflanzenarten, die nicht zur Familie der Süßgräser gehören. Sie umfassen beispielsweise Quinoa, Amarant und Buchweizen.

In einer weiter bevorzugten Ausführungsform weist die äussere Komponente der erfindungsgemäßen Tiernahrungsmittelzusammensetzung, welche eine innere Komponente vollständig umschließt, Tapiokastärke auf.

In einer weiter bevorzugten Ausführungsform weist die äussere Komponente der erfindungsgemäßen Tiernahrungsmittelzusammensetzung, welche eine innere Komponente vollständig umschließt, Stärke aus Gemüse und Obst auf.

Gemüse- und Obst im Sinne der vorliegenden Erfindung umfasst Bohnen, Erbsen, Linsen, Tomaten.

Vorteilhaft kann die innere Komponente auch Pseudogetreide enthalten.

Weiter vorteilhaft enthält auch die innere Komponente Tapiokastärke.

Weiter vorteilhaft enthält auch die innere Komponente Stärke aus erfindungsgemäßem Gemüse und Obst.

Weiter bevorzugt umfasst die äussere Komponente der erfindungsgemäßen Tiernahrungsmittelzusammensetzung 2 bis 10 Gew.-% Wasser, 8 bis 15 Gew.-% Fett, 15 bis 25 Gew.-% Kohlehydrate (davon 25 bis 40 Gew.-% Kartoffelmehl), 30 bis 45 Gew.-% Proteine, bezogen auf das Gesamtgewicht der äusseren Komponente, und die innere Komponente der erfindungsgemäßen Tiernahrungsmittelzusammensetzung enthält 2 bis 5 Gew.-% Wasser, 35 bis 60 Gew.-% Fett, 35 bis 60 Gew.-% Kohlehydrate (davon 35 bis 60 Gew.-% Kartoffelmehl), 0, 1 bis 10 Gew.-% Proteine, bezogen auf das Gesamtgewicht der inneren Komponente.

Die Kombination aus zwei Komponenten, einer äusseren, härteren Komponente und einer inneren, weicheren Komponente, wobei die äussere und die innere Komponente Kartoffelmehl enthält, verbessert die Schmackhaftigkeit gegenüber einem Futtermittelprodukt bestehend aus nur einer Komponente.

Kartoffelmehl zeichnet sich durch sehr gutes Wasserbindungsvermögen aus. Überraschenderweise wird durch das Kartoffelmehl in der äusseren und der inneren Komponente der erfindungsgemäßen Tiernahrungsmittelzusammensetzung, welches geringeres Steifungsvermögen als beispielsweise Mais- oder Weizenstärke aufweist, dennoch eine optimale Stärkeverkleisterung mit hoher Viskosität erhalten. Die Tiernahrungsmittelzusammensetzung gemäß der vorliegenden Erfindung ist somit durch eine gleichmäßige Struktur und Porung gekennzeichnet.

Stärkekörner quellen mit Wasser unter Erhitzen zu einem Vielfachen ihres ursprünglichen Volumens. Dieses Quellvermögen ist je nach Stärkeart unterschiedlich ausgeprägt. Dieses Quellvermögen gibt auch einen Anhaltspunkt über die Wasserbindekapazität der Stärke.

Kartoffelstärke beispielsweise quillt bis zum tausendfachen des ursprünglichen Volumens. Tapiokastärke beispielsweise quillt bis zum 70-fachen Volumen.

Getreidestärken weisen üblicherweise ein geringeres Quellvermögen auf. Maisstärke quillt bis zum 24-fachen Volumen und Weizenstärke zum 20-fachen Volumen.

Die äussere Komponente ist vorzugsweise hart, weiter bevorzugt knusprig und verursacht vorzugsweise durch ihre glatte Struktur ein verbessertes Mundgefühl bei den Konsumenten der erfindungsgemäßen Tiernahrungsmittelzusammensetzung.

Weiterhin vorteilhaft ist die Akzeptanz der erfindungsgemäßen Tiernahrungsmittelzusammensetzung basierend auf Kartoffelmehl höher als diejenige von Tierfutter basierend auf Getreide.

Die Tiernahrungsmittelzusammensetzung ist ferner durch gute Lagerstabilität gekennzeichnet. Durch die spezifische Wasserbindung des Kartoffelmehls bleibt die gewünschte Konsistenz der erfindungsgemäßen Tiernahrungsmittelzusammensetzung erhalten und es tritt weniger Retrogradation auf.

Stärke besteht aus den beiden Bestandteilen Amylose und Amylopektin, in unterschiedlichen Mengenanteilen. Die Struktur von Amylose ist eine unverzweigte Kette von 100 bis 1400 α-1,4-glycosidisch verbundenen D-Glucoseeinheiten mit einem Molekulargewicht von 15.000 bis 200.000 g/mol. Amylopektin besteht aus α-1,4-glycosidisch miteinander verbunden D-Glucose-Monomeren, bei denen etwa alle 15-30 Monomere eine α-1,6-glykosidisch verknüpfte Seitenkette mit etwa 15-25 Glucoseeinheiten dranhängt. Dadurch entsteht eine baumartige Verzweigung. Amylopektin hat ein Molekulargewicht von 10 - 700 Millionen g/mol.

Hauptverantwortlich für die Retrogradation ist der Stärkebestandteil Amylose. Kartoffelstärke enthält 20% Amylose und damit beispielsweise weniger als die beiden Getreidestärken Maisstärke (27% Amylose) und Weizenstärke (28% Amylose). Amylopektin hat dagegen wenig Einfluß auf die Stärkeretrogradation.

Getreidebestandteile im Sinne der vorliegenden Erfindung sind Getreidekomponenten aus der Familie der Süßgräser. Insbesondere bedeutet der Begriff "Getreidebestandteile" Getreideeiweiße.

Süßgräser stellen eine Pflanzenfamilie der Grasartigen dar. Alle Getreide wie Weizen, Roggen, Gerste, Hafer, Hirse, Mais und Reis zählen zur Familie der Süßgräser.

Durch die Verwendung von Kartoffelmehl ist die erfindungsgemäße Tiernahrungsmittelzusammensetzung glutenfrei. Gluten bildet den Oberbegriff für Getreideeiweiße. Sie bestehen aus zwei Fraktionen, wobei eine der beiden alkohollöslich ist. Gluten ist in getreidebasierten Tiernahrungsprodukten enthalten und stellt einen Auslöser für Allergien durch Futter bei Haustieren dar. Durch Ersatz von Getreide- durch Kartoffelmehl kann ein Großteil der Futtermittelallergien verhindert werden. Aufgrund der spezifischen Zusammensetzung und der Glutenfeiheit wird die erfindungsgemäße Tiernahrungsmittelzusammensetzung auch von empfindlichen Haustieren gut vertragen.

Das Getreideeiweiß einiger Gattungen wie Weizen, Dinkel, Roggen, Gerste oder Triticale wird als Gluten bezeichnet. Andere Getreidegattungen wie Mais, Reis oder Hirse sind glutenfrei.

Pseudogetreide sind glutenfrei.

Vorteilhaft resultiert aus der Koextrusion der inneren innerhalb der äusseren Komponente ein verbessertes Mundgefühl und dadurch gesteigerte Akzeptanz durch das konsumierende Tier.

Der Einsatz von Kartoffelmehl in der inneren Komponente, welches Kartoffelstärke beinhaltet, verbessert durch die gleichmäßige Form der Stärkekörner das Mundgefühl der erfindungsgemäßen Mehrkomponenten-Tiernahrungsmittelzusammen-setzung.

Durch den verbesserten Aufschluss der Kartoffelstärke im Vergleich zu getreidebasierten Produkten kommt es zu einer gleichmäßigeren und dichteren Porung und einem verringerten Fettübertritt von der inneren in die äussere Komponente. Vorteilhaft werden dadurch sowohl die organoleptischen Eigenschaften des Produkts sowie die Akzeptanz durch den Konsumenten verbessert.

Kartoffelstärke verkleistert bereits bei niedrigeren Temperaturen von 56-66°C und wird dadurch beispielsweise besser aufgeschlossen als Maisstärke. Maisstärke verkleistert bei Temperaturen von 75-80°C. Kartoffelstärke verkleistert auch bei niedrigeren Temperaturen als Weizenstärke. Weizenstärke verkleistert bei Temperaturen von 80-85°C.

Beispielsweise verkleistert auch Tapiokastärke bei 60-65°C und damit bei niedrigeren Temperaturen als beispielsweise Mais- und Weizenstärke.

Die Kartoffelstärke in ihrer Eigenschaft als Verkleisterungsagent enthält wenig alpha-Amylase und wird somit auch nur wenig enzymatisch abgebaut. Dies kann über die Simulation im Amylograph indirekt bestimmt werden.

Zu den organoleptischen Eigenschaften der erfindungsgemäßen Tiernahrungsmittelzusammensetzung zählen die Textur, das Aussehen und der Geschmack.

Durch Koextrusion der inneren Komponente innerhalb der äusseren Komponente kann das Produkt besser von Hand gefüttert werden. In einer bevorzugten Ausführungsform ist die innere Komponente durch einen hohen Fettgehalt gekennzeichnet. Durch Koextrusion der inneren innerhalb der äusseren Komponente wird die innere Komponente vollständig von der äusseren Komponente umschlossen. Dadurch wird ein Austreten von Fett sowie eine daraus resultierende fettige Oberfläche des Produkts unterbunden. Durch die Koextrusion der inneren Komponente innerhalb der äusseren Komponente wird die innere Komponente vollständig von der äusseren Komponente umschlossen. Es kommt zu einem Luftabschluss durch die äussere Komponente und folglich zu einer gesteigerten Lagerstabilität des Produkts.

Gemäß einer vorteilhaften Ausführungsform der Erfindung wird die Verwendung von einfachen Verpackungstechniken ermöglicht, weil die weichere, innere Komponente vollständig von der äusseren, härteren Komponente umschlossen ist und folglich ein Austreten der weicheren, inneren Komponente verhindert wird.

Die Tiernahrungsmittelzusammensetzung gemäß der vorliegenden Erfindung kann eine größte Abmessung von 6 bis 35 mm und eine zweite größte Abmessung von 5 bis 25 mm aufweisen.

Die Tiernahrungsmittelzusammensetzung gemäß der vorliegenden Erfindung kann eine größte Abmessung von 9 bis 35 mm und eine zweite größte Abmessung von 7 bis 25 mm aufweisen.

Vorteilhafterweise kann die Tiernahrungsmittelzusammensetzung gemäß der vorliegenden Erfindung ein Gewicht von 0,2 bis 8 Gramm pro Stück, vorzugsweise ein Gewicht von 0,35 bis 5 Gramm pro Stück aufweisen.

Vorzugsweise weist die äussere Komponente der Tiernahrungsmittelzusammensetzung einen Kartoffelmehlanteil von mindestens 30 Gew.-% auf, bevorzugt einen Kartoffelmehlanteil von mindestens 50 Gew.-%, und die innere Komponente einen Kartoffelmehlanteil von mindestens 40 Gew.-%, bevorzugt einen Kartoffelmehlanteil von mindestens 45 Gew.-%, weiter bevorzugt einen Kartoffelmehlanteil von mindestens 50 Gew.-%. Kartoffelmehl induziert einen hohen Sättigungsindex. Vorteilhaft kann die vorliegende Erfindung auch Nahrungsmittelzusammensetzungen für übergewichtige Haustiere bereitstellen. Bei konsumierenden Tieren tritt das Sättigungsgefühl schneller ein, wodurch die verzehrte Menge reduziert werden kann.

Weiter bevorzugt beträgt der Gewichtsanteil der äusseren Komponente der Tiernahrungsmittelzusammensetzung mindestens 40 Gew.-%, bevorzugt mindestens 60 Gew-%, weiter bevorzugt mindestens 80 Gew.-%, und der Anteil der inneren Komponente mindestens 10 Gew.-%, bevorzugt mindestens 20 Gew-%, weiter bevorzugt mindestens 25 Gew.-%.

In einer weiteren Ausführungsform weist die äussere Komponente der Tiernahrungsmittelzusammensetzung einen Anteil an Pseudogetreide von mindestens 10 Gew.-% auf, bevorzugt von mindestens 30 Gew.-%, weiter bevorzugt von mindestens 50 Gew.-% und die innere Komponente einen Anteil an Pseudogetreide von mindestens 40 Gew.-%, bevorzugt von mindestens 45 Gew.-%, weiter bevorzugt von mindestens 50 Gew.-%.

In einer bevorzugten Ausführungsform weist die äussere Komponente der Tiernahrungsmittelzusammensetzung einen Tapioka-Anteil von mindestens 10 Gew.-% auf, bevorzugt von mindestens 30 Gew.-%, weiter bevorzugt von mindestens 50 Gew.-% und die innere Komponente einen Tapioka-Anteil von mindestens 40 Gew.-%, bevorzugt von mindestens 45 Gew.-%, weiter bevorzugt von mindestens 50 Gew.-%.

Die äussere Komponente der vorliegenden Erfindung enthält ferner wenigstens einen Inhaltsstoff ausgewählt aus einem Fett, einem Protein oder einer Kombination derselben. Aufgrund der spezifischen Wasserbindungseigenschaften des in der äusseren Komponente enthaltenen Kartoffelmehls und dessen exzellenten Quell- und Verkleisterungseigenschaften, ist die äussere Komponente durch eine feine, glatte Struktur gekennzeichnet, wobei die äussere Komponente knackiger und die innere Komponente cremiger wird.

Vorteilhaft beinhaltet die innere Komponente der Tiernahrungsmittelzusammensetzung der vorliegenden Erfindung eine Mischung aus Lipiden und festen Inhaltsstoffen. Die Lipide bilden mit den festen Inhaltsstoffen eine Matrix, welche weicher ist als die äussere Komponente. Die weichere, innere Komponente wird ohne Zusatz von Wasser gebildet und hat somit einen minimalen Wassergehalt und äußerst geringe Wasseraktivitäten. Somit benötigt die innere Komponente keine strengen Sterilisationsmaßnahmen oder antimikrobielle und/oder antimykotische Behandlungen zur Stabilisierung.

Die weichere innere Komponente der Tiernahrungsmittelzusammensetzung gemäß der vorliegenden Erfindung weist vorteilhaft eine Wasseraktivität, a_{w}, von weniger als 0,7 auf, bevorzugt eine Wasseraktivität, a_{w}, von weniger als 0,6, weiter bevorzugt eine Wasseraktivität, a_{w}, von weniger als 0,5.

Bevorzugt weist die weichere innere Komponente eine Wasseraktivität, a_{w}, von weniger als 0,4 auf, bevorzugt eine Wasseraktivität, a_{w}, von weniger als 0,3, weiter bevorzugt eine Wasseraktivität, a_{w}, von weniger als 0,2 auf.

Weiter vorteilhaft beinhaltet die Mischung aus Lipiden und Feststoffen der weicheren, inneren Komponente der Tiernahrungsmittelzusammensetzung der vorliegenden Erfindung ein Lipid, welches ein gesättigtes oder ungesättigtes, lang- oder mittelkettiges Mono-, Di- oder Triacylglycerol umfasst. Vorteilhaft ist der Lipidgehalt der inneren, weicheren Komponente der erfindungsgemäßen Tiernahrungsmittelzusammensetzung größer als 35 Gew.-%, weiter vorteilhaft größer als 40 Gew.-%, besonders bevorzugt größer als 50 Gew.-%.

Die innere Komponente bildet dadurch ohne Zusatz von Wasser eine cremige Textur.

In einer bevorzugten Ausführungsform enthält die innere Komponente der Tiernahrungsmittelzusammensetzung der vorliegenden Erfindung weiter einen Inhaltsstoff ausgewählt aus Fetten, Proteinen und Kombinationen derselben.

In einem weiteren Aspekt der vorliegenden Erfindung schließt die weichere, innere Komponente der Tiernahrungsmittelzusammensetzung ferner wenigstens einen zusätzlichen Inhaltsstoff ausgewählt aus nährenden oder nicht nährenden Verbindungen, funktionellen Verbindungen, pharmazeutischen Verbindungen und Mischungen derselben ein. Die vorliegende Erfindung kann dadurch als ein Zuführungssystem für verschiedene Nährstoffe, nicht nährende Stoffe, funktionelle und/oder pharmazeutische Verbindungen dienen. Solche Zusatzstoffe können Inhaltsstoffe sein, die die Haut- oder Felleigenschaften des konsumierenden Tieres verbessern, entzündungshemmend wirken, den Atemgeruch verbessern, die Immunreaktion verstärken, oder Parasiten und/oder Mikroorganismen bekämpfen. Solche funktionellen Inhaltsstoffe stellen beispielsweise Curcumin, Rosmarinöl, Petersiliensamenöl oder Nachtkerzenöl dar.

Insbesondere können durch die vorliegende Erfindung solche Inhaltsstoffe der inneren Komponente zugesetzt sein, welche auf Wärme, Licht und Sauerstoff empfindlich sind, da die innere Komponente vollständig von der äusseren Komponente umschlossen ist und funktionelle Inhaltsstoffe im Wesentlichen vor Wärme, Licht und Sauerstoff geschützt sein können.

Vorteilhafterweise sind die nährenden Verbindungen innerhalb der inneren Komponente der Tiernahrungsmittelzusammensetzung ausgewählt aus Mineralstoffen, Vitaminen und Mischungen derselben. Dem Körper können somit wichtige Nährstoffe zugeführt werden, wodurch beispielsweise der Stoffwechsel unterstützt und das Wohlbefinden des Konsumenten gesteigert werden kann.

Vorzugsweise sind die nicht nährenden Verbindungen enthalten in der inneren Komponente der Tiernahrungsmittel-zusammensetzung ausgewählt aus pflanzlichen Verbindungen, Extrakten auf Pflanzenbasis und Mischungen derselben. Vorzugsweise können die nicht nährenden Verbindungen Faser-Cellulose umfassen. Derartige Verbindungen und Extrakte können beispielsweise entzündungshemmend wirken.

In einer bevorzugten Ausführungsform der vorliegenden Erfindung enthält die erfindungsgemäße weichere, innere Komponente ferner wenigstens einen zusätzlichen Inhaltsstoff ausgewählt aus antioxidierenden Inhaltsstoffen, entzündungs-hemmenden Inhaltsstoffen, Präbiotika und/oder Probiotika. Antioxidierende Inhaltsstoffe verringern den oxidativen Stress in dem jeweiligen Konsumenten, beispielsweise in Katzen. Präbiotika und Probiotika, beispielsweise Inulin oder Fruktooligosaccharide unterstützen die Funktion der Darmflora und steigern dadurch die Verträglichkeit der erfindungsgemäßen Nahrungsmittelzusammensetzung, sowie das Wohlbefinden und die Gesundheit der Konsumenten.

### Figuren

Die vorliegende Erfindung wird nachfolgend unter Bezugnahme auf die Begleitzeichnungen näher beschrieben, welche ein bevorzugtes Ausführungsbeispiel der Erfindung zeigen.
Fig. 1 stellt eine schematische perspektivische Ansicht einer Tiernahrungsmittelzusammensetzung gemäß der vorliegenden Erfindung dar.
Fig. 2 zeigt eine schematische Querschnittsansicht einer Tiernahrungsmittelzusammensetzung gemäß der vorliegenden Erfindung. **1** beschreibt die härtere, äussere Komponente der Tiernahrungsmittelzusammensetzung, welche die weichere, innere Komponente **2** der Tiernahrungsmittelzusammensetzung umschließt.

### Beispiele

Die Beispiele sollen für die Erfindung nicht als beschränkend angesehen werden.

### Beispiel 1

Eine Tiernahrungsmittelzusammensetzung gemäß der Erfindung weist folgende Bestandteile auf:

| | **Gesamt [%]** | **Äußere Komponente [%]** | **Innere Komponente [%]** |
|---|---|---|---|
| **Kartoffelprotein** | **14** | **17,5** | |
| **Kartoffelmehl** | **23** | **28,75** | **48** |
| Füllmasse Getreidefrei | 20 | | |
| Geflügelfleischmehl | 26 | 32,5 | |
| Geflügelhydrolisat | 5 | 6,25 | |
| Geflügelfett | 5 | 6,25 | 50 |
| Lignocellulose | 4 | 5 | |
| Milchpulver | 2,5 | 3,125 | 2 |
| Vitamine | 0,3 | 0,375 | |
| Mineralstoffe | 0,2 | 0,25 | |
| **Summe** | **100** | **100** | **100** |

### Beispiel 2

Das folgende Beispiel veranschaulicht die gesteigerte Akzeptanz und Schmackhaftigkeit einer Tiernahrungsmittel-zusammensetzung gemäß der vorliegenden Erfindung.

Die Fütterungsleistung und Futtermittelpräferenz einer Tiernahrungsmittelzusammensetzung gemäß der vorliegenden Erfindung basierend auf Kartoffelmehl gegenüber einem vergleichbaren Produkt auf Getreidebasis, wurde in Katzen (n=20) unterschiedlicher Altersgruppen (Alter: 1 bis 9 Jahre) untersucht. Testverfahren zur Bestimmung von Fütterungsleistung und Futterpräferenz sind dem Fachmann auf dem Gebiet von Tiernahrung gut bekannt.

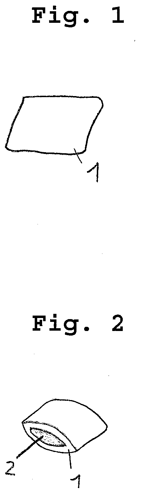

Der Futterpräferenztest ergab, dass 85 % der Katzen die Tiernahrungsmittelzusammensetzung gemäß der vorliegenden Erfindung, aufweisend zwei Komponenten, wovon beide Komponenten auf Kartoffelmehl basierten, und, wie in Fig. 1 und 2 gezeigt, eine äussere Komponente **1** eine Hülle um eine innere Komponente **2** bildet, bevorzugten, wohingegen 15 % der Katzen das herkömmliche, getreidebasierte Tierfutter präferierten.

### Beispiel 3

Im folgenden Beispiel wurden getestet, ob Katzen die erfindungsgemäße Tiernahrungsmittelzusammensetzung ohne Getreidebestandteile gegenüber Getreide-enthaltender Tiernahrungsmittelzusammensetzung bevorzugen.

Die Fütterungsleistung und Futtermittelpräferenz einer Tiernahrungsmittelzusammensetzung gemäß der vorliegenden Erfindung basierend auf Kartoffelmehl gegenüber einem vergleichbaren Produkt auf Getreidebasis, wurde in Katzen (n=20) unterschiedlicher Altersgruppen (Alter: 1 bis 9 Jahre) untersucht. Testverfahren zur Bestimmung von Fütterungsleistung und Futterpräferenz sind dem Fachmann auf dem Gebiet von Tiernahrung gut bekannt.

Der Futterpräferenztest ergab, dass 60 % der Katzen die Tiernahrungsmittelzusammensetzung gemäß der vorliegenden Erfindung, aufweisend zwei Komponenten, wovon beide Komponenten auf Kartoffelmehl basierten, und, wie in Fig. 1 und 2 gezeigt, eine äussere Komponente **1** eine Hülle um eine innere Komponente **2** bildet, bevorzugten, wohingegen 40 % der Katzen das herkömmliche, getreidebasierte Tierfutter präferierten.

### Bezugszeichenliste

- **1**: Äussere Komponente der Tiernahrungsmittelzusammensetzung
- **2**: Innere Komponente der Tiernahrungsmittelzusammensetzung

## Patentansprüche

1. Tiernahrungsmittelzusammensetzung aufweisend zwei Komponenten, eine äussere Komponente, welche eine innere Komponente vollständig umschließt,
wobei die äussere Komponente Kartoffelmehl und weiter wenigstens einen Inhaltsstoff ausgewählt aus einem Fett, einem Protein oder einer Kombination derselben enthält und härter ist als die innere Komponente, wobei:
- die innere Komponente Kartoffelmehl enthält,
- die äussere Komponente einen Kartoffelmehlanteil von mindestens 10 Gew.-% aufweist, und die äussere Komponente einen Gesamtfeuchtigkeitsgehalt von weniger als 8 Gew.-% aufweist,
- die äussere Komponente frei von Getreidebestandteilen ist,
- die innere Komponente frei von Getreidebestandteilen ist, und
- die Tiernahrungsmittelzusammensetzung durch Ko-Extrusion der inneren Komponente innerhalb der äusseren Komponente hergestellt ist.

2. Tiernahrungsmittelzusammensetzung gemäß Anspruch 1, **dadurch gekennzeichnet, dass** sie eine größte Abmessung von 9 bis 35 mm aufweist und eine zweite größte Abmessung von 7 bis 25 mm aufweist.

3. Tiernahrungsmittelzusammensetzung gemäß einem der vorhergehenden Ansprüche, **dadurch gekennzeichnet, dass** sie ein Gewicht von 0,2 bis 8 Gramm pro Stück aufweist, vorzugsweise ein Gewicht von 0,35 bis 5 Gramm pro Stück.

4. Tiernahrungsmittelzusammensetzung gemäß einem der vorhergehenden Ansprüche, **dadurch gekennzeichnet, dass** die äussere Komponente einen Kartoffelmehlanteil von mindestens 30 Gew.-%, weiter bevorzugt einen Kartoffelmehlanteil von mindestens 50 Gew.-% und die innere Komponente einen Kartoffelmehlanteil von mindestens 40 Gew.-% aufweist, bevorzugt einen Kartoffelmehlanteil von mindestens 45 Gew.-%, weiter bevorzugt einen Kartoffelmehlanteil von mindestens 50 Gew.-% aufweist.

5. Tiernahrungsmittelzusammensetzung gemäß einem der vorhergehenden Ansprüche, **dadurch gekennzeichnet, dass** der Gewichtsanteil der äusseren Komponente mindestens 40 Gew.-%, bevorzugt mindestens 60 Gew-%, weiter bevorzugt mindestens 80 Gew.-% beträgt, und der Anteil der inneren Komponente mindestens 10 Gew.-%, bevorzugt mindestens 20 Gew-%, weiter bevorzugt mindestens 25 Gew.-% beträgt.

6. Tiernahrungsmittelzusammensetzung gemäß einem der vorhergehenden Ansprüche, **dadurch gekennzeichnet, dass** die innere Komponente eine Mischung aus Lipiden und festen Inhaltsstoffen enthält.

7. Tiernahrungsmittelzusammensetzung gemäß einem der vorhergehenden Ansprüche, **dadurch gekennzeichnet, dass** die innere Komponente eine Wasseraktivität, a_{w}, von weniger als 0,4 aufweist, bevorzugt eine Wasseraktivität, a_{w}, von weniger als 0,3, weiter bevorzugt von weniger als 0,2 aufweist.

8. Tiernahrungsmittelzusammensetzung gemäß Anspruch 6, **dadurch gekennzeichnet, dass** die Mischung aus Lipiden und Feststoffen ein Lipid beinhaltet, welches ein gesättigtes oder ungesättigtes, lang- oder mittelkettiges Mono-, Di- oder Triacylglycerol umfasst.

9. Tiernahrungsmittelzusammensetzung gemäß einem der vorhergehenden Ansprüche, **dadurch gekennzeichnet, dass** der Lipidgehalt der inneren Komponente größer ist als 35 Gew.-%, vorzugsweise größer als 50 Gew.-%.

10. Tiernahrungsmittelzusammensetzung gemäß einem der vorhergehenden Ansprüche, **dadurch gekennzeichnet, dass** die innere Komponente ferner einen Inhaltsstoff enthält, der ausgewählt ist aus Fetten, Proteinen und Kombinationen derselben.

11. Tiernahrungsmittelzusammensetzung gemäß einem der vorhergehenden Ansprüche, **dadurch gekennzeichnet, dass** die innere Komponente ferner wenigstens einen zusätzlichen Inhaltsstoff ausgewählt aus nährenden oder nicht nährenden Verbindungen, funktionellen Verbindungen, pharmazeutischen Verbindungen und Mischungen derselben enthält.

12. Tiernahrungsmittelzusammensetzung gemäß Anspruch 11, **dadurch gekennzeichnet, dass** die nährenden Verbindungen ausgewählt sind aus Mineralstoffen, Vitaminen und Mischungen derselben.

13. Tiernahrungsmittelzusammensetzung gemäß Anspruch 11 oder 12, **dadurch gekennzeichnet, dass** die nicht nährenden Verbindungen ausgewählt sind aus pflanzlichen Verbindungen, Extrakten auf Pflanzenbasis und Mischungen derselben.

14. Tiernahrungsmittelzusammensetzung gemäß einem der vorhergehenden Ansprüche, **dadurch gekennzeichnet, dass** die innere Komponente ferner wenigstens einen zusätzlichen Inhaltsstoff ausgewählt aus antioxidierenden Inhaltsstoffen, entzündungshemmenden Inhaltsstoffen, Präbiotika und/oder Probiotika enthält.

## Claims

1. Animal feed composition comprising two components, an outer component which completely surrounds an inner component,
where the outer component comprises potato flour and further at least one ingredient selected from a fat, a protein or a combination of the same and is harder than the inner component, where:
- the inner component comprises potato flour,
- the outer component has a potato flour fraction of at least 10% by weight, and the outer component has a total moisture content of less than 8% by weight,
- the outer component is free from cereal constituents,
- the inner component is free from cereal constituents, and
- the animal feed composition is produced by co-extrusion of the inner component within the outer component.

2. Animal feed composition according to Claim 1, **characterized in that** it has a largest dimension of 9 to 35 mm and a second largest dimension of 7 to 25 mm.

3. Animal feed composition according to either of the preceding claims, **characterized in that** it has a weight of 0.2 to 8 grams per piece, preferably a weight of 0.35 to 5 grams per piece.

4. Animal feed composition according to any of the preceding claims, **characterized in that** the outer component has a potato flour fraction of at least 30% by weight, more preferably a potato flour fraction of at least 50% by weight, and the inner component has a potato flour fraction of at least 40% by weight, preferably a potato flour fraction of at least 45% by weight, more preferably a potato flour fraction of at least 50% by weight.

5. Animal feed composition according to any of the preceding claims, **characterized in that** the weight fraction of the outer component is at least 40% by weight, preferably at least 60% by weight, more preferably at least 80% by weight, and the fraction of the inner component is at least 10% by weight, preferably at least 20% by weight, more preferably at least 25% by weight.

6. Animal feed composition according to any of the preceding claims, **characterized in that** the inner component comprises a mixture of lipids and solid ingredients.

7. Animal feed composition according to any of the preceding claims, **characterized in that** the inner component has a water activity, a_{w}, of less than 0.4, preferably a water activity, a_{w}, of less than 0.3, more preferably of less than 0.2.

8. Animal feed composition according to Claim 6, **characterized in that** the mixture of lipids and solids includes a lipid which comprises a saturated or unsaturated, long-chain or medium-chain mono-, di- or triacylglycerol.

9. Animal feed composition according to any of the preceding claims, **characterized in that** the lipid content of the inner component is greater than 35% by weight, preferably greater than 50% by weight.

10. Animal feed composition according to any of the preceding claims, **characterized in that** the inner component further comprises an ingredient selected from fats, proteins and combinations of the same.

11. Animal feed composition according to any of the preceding claims, **characterized in that** the inner component further comprises at least one additional ingredient selected from nutritional or non-nutritional compounds, functional compounds, pharmaceutical compounds and mixtures of the same.

12. Animal feed composition according to Claim 11, **characterized in that** the nutritional compounds are selected from minerals, vitamins and mixtures of thereof.

13. Animal feed composition according to Claim 11 or 12, **characterized in that** the non-nutritional compounds are selected from plant compounds, plant-based extracts and mixtures of the same.

14. Animal feed composition according to any of the preceding claims, **characterized in that** the inner component further comprises at least one additional ingredient selected from antioxidant ingredients, antiinflammatory ingredients, prebiotics and/or probiotics.

## Revendications

1. Composition d'aliment pour animaux comprenant deux composants, un composant extérieur, qui enveloppe entièrement un composant intérieur,
le composant extérieur contenant de la farine de pommes de terre et en outre au moins un ingrédient choisi parmi une matière grasse, une protéine ou une combinaison de celles-ci, et étant plus dur que le composant intérieur :
- le composant intérieur contenant de la farine de pommes de terre,
- le composant extérieur présentant une proportion de farine de pommes de terre d'au moins 10 % en poids et le composant extérieur présentant une teneur totale en humidité de moins de 8 % en poids,
- le composant extérieur étant exempt de constituants céréaliers,
- le composant intérieur étant exempt de constituants céréaliers et
- la composition d'aliment pour animaux étant fabriquée par co-extrusion du composant intérieur dans le composant extérieur.

2. Composition d'aliment pour animaux selon la revendication 1, **caractérisée en ce qu'**elle présente une dimension maximale de 9 à 35 mm et une deuxième dimension maximale de 7 à 25 mm.

3. Composition d'aliment pour animaux selon l'une quelconque des revendications précédentes, **caractérisée en ce qu'**elle présente un poids de 0,2 à 8 grammes par pièce, de préférence un poids de 0,35 à 5 grammes par pièce.

4. Composition d'aliment pour animaux selon l'une quelconque des revendications précédentes, **caractérisée en ce que** le composant extérieur présente une proportion de farine de pommes de terre d'au moins 30 % en poids, de manière davantage préférée une proportion de farine de pommes de terre d'au moins 50 % en poids, et le composant intérieur présente une proportion de farine de pommes de terre d'au moins 40 % en poids, de préférence une proportion de farine de pommes de terre d'au moins 45 % en poids, de manière davantage préférée une proportion de farine de pommes de terre d'au moins 50 % en poids.

5. Composition d'aliment pour animaux selon l'une quelconque des revendications précédentes, **caractérisée en ce que** la proportion en poids du composant extérieur est d'au moins 40 % en poids, de préférence d'au moins 60 % en poids, de manière davantage préférée d'au moins 80 % en poids, et la proportion du composant intérieur est d'au moins 10 % en poids, de préférence d'au moins 20 % en poids, de manière davantage préférée d'au moins 25 % en poids.

6. Composition d'aliment pour animaux selon l'une quelconque des revendications précédentes, **caractérisée en ce que** le composant intérieur contient un mélange de lipides et d'ingrédients solides.

7. Composition d'aliment pour animaux selon l'une quelconque des revendications précédentes, **caractérisée en ce que** le composant intérieur présente une activité de l'eau, a_{w}, de moins de 0,4, de préférence une activité de l'eau, a_{w}, de moins de 0,3, de manière davantage préférée de moins de 0,2.

8. Composition d'aliment pour animaux selon la revendication 6, **caractérisée en ce que** le mélange de lipides et de solides contient un lipide qui comprend un mono-, di- ou triacylglycérol saturé ou insaturé, à chaîne longue ou moyenne.

9. Composition d'aliment pour animaux selon l'une quelconque des revendications précédentes, **caractérisée en ce que** la teneur en lipides du composant intérieur est supérieure à 35 % en poids, de préférence supérieure à 50 % en poids.

10. Composition d'aliment pour animaux selon l'une quelconque des revendications précédentes, **caractérisée en ce que** le composant intérieur contient en outre un ingrédient qui est choisi parmi les matières grasses, les protéines et les combinaisons de celles-ci.

11. Composition d'aliment pour animaux selon l'une quelconque des revendications précédentes, **caractérisée en ce que** le composant intérieur contient en outre au moins un ingrédient supplémentaire choisi parmi les composés nutritifs ou non nutritifs, les composés fonctionnels, les composés pharmaceutiques et les mélanges de ceux-ci.

12. Composition d'aliment pour animaux selon la revendication 11, **caractérisée en ce que** les composés nutritifs sont choisis parmi les minéraux, les vitamines et les mélanges de ceux-ci.

13. Composition d'aliment pour animaux selon la revendication 11 ou 12, **caractérisée en ce que** les composés non nutritifs sont choisis parmi les composés végétaux, les extraits à base de plantes et les mélanges de ceux-ci.

14. Composition d'aliment pour animaux selon l'une quelconque des revendications précédentes, **caractérisée en ce que** le composant intérieur contient en outre au moins un ingrédient supplémentaire choisi parmi les ingrédients antioxydants, les ingrédients anti-inflammatoires, les prébiotiques et/ou les probiotiques.
